# EUROPÄISCHE PATENTANMELDUNG

(11) **EP 2 704 361 A2**
(43) Veröffentlichungstag der Anmeldung: **05.03.2014**
(21) Anmeldenummer: 13401086.7
(22) Anmeldetag: 09.08.2013
(51) Int. Cl.: H04L 12/24

(54) **Mobiles Endgerät zur Wartung eines Telekommunikationssystems**

(30) Priorität: 20.08.2012 DE 202012103141 U
(71) Anmelder: ADVA Optical Networking SE, 98617 Meiningen (DE)
(72) Erfinder:
(74) Vertreter: Eder, Christian

(57) **Zusammenfassung**

Die Erfindung betrifft ein mobiles Endgerät zur Wartung eines Telekommunikationssystems, wobei das Telekommunikationssystem einen Systemcontroller und wenigstens ein Modul und/oder wenigstens einen (im gesteckten Zustand des Moduls von außen zugänglichen) Schnittstellen-Port umfasst, wobei das mobile Endgerät eine Erkennungseinrichtung aufweist, um ein Modul oder einen Schnittstellen-Port zu identifizieren. Weiterhin betrifft die Erfindung eine Verwendung eines derartigen mobilen Endgeräts, sowie eine Anordnung aus einem Telekommunikationssystem und einem derartigen mobilen Endgerät.

## Beschreibung

Die Erfindung betrifft ein mobiles Endgerät zur Wartung eines Telekommunikationssystems. Derartige Telekommunikationssysteme (d.h. Audio-, Video und/oder Datenübertragungssysteme), beispielsweise optische Systeme für Hochgeschwindigkeitsübertragungen von wenigstens 100 GBit/s, insbesondere Wellenlängenmultiplexsysteme (WDM-Systeme), umfassen mehrere Netzknoten, welche räumlich oft mehrere Kilometer (auch Hunderte Kilometer) getrennt sind. Derartige Netzknoten beinhalten eine Reihe von elektronischen Komponenten bzw. wechselbaren Modulen und eine große Anzahl Schnittstellen-Ports (optisch oder elektrisch), welche im installierten Zustand der Module von außen zugänglich sind.

Die Netzknoten können zentral über eine Netzwerk-Operations-Zentrale (NOC) gewartet werden, wobei die NOC hierzu in der Regel mit allen Modulen aller Netzknoten in Verbindung steht. Zudem können die Module eines Netzknotens auch lokal über einen in dem jeweiligen Netzknoten vorhandenen Systemcontroller gewartet werden.

Im Falle von Wartungsarbeiten, welche einen lokalen Eingriff vor Ort, wie beispielsweise den Aus-, Einbau oder Austausch von (Hardware-)Komponenten, Wechsel oder Überprüfung der Verkabelung, erfordern, ist eine zentrale Wartungslösung nicht möglich, so dass eine Wartung vor Ort direkt am Netzknoten unvermeidbar ist.

Diese Arbeit wird von einem Außendiensttechniker ausgeführt, wobei der Techniker hierbei eine Vor-Ort Komponente des Systems, beispielsweise ein Rack mit Abteilungen (shelves und subshelves) und Einschüben mit Slots, sowie darin eingesetzten Steckkarten vorfindet. Vorgenannte Komponenten werden im Folgenden aufgrund der unterschiedlichen Ausgestaltungen als vorzugsweise wechselbare Module der Vor-Ort Komponente eines Telekommunikationssystems beschrieben.

Um seine Arbeit an einem beliebigen Modul auszuführen oder Verkabelung, Funktion, etc. Vor-Ort überprüfen zu können, benötigt der Techniker die genaue Information über ein jeweiliges Modul. Gerade bei einer Vielzahl von Modulen ist die Identifikation eines Moduls jedoch nicht trivial, so dass bei der Identifikation bzw. Lokalisierung eines einzelnen Moduls Fehler auftreten können.

Zudem sind derartige Hochgeschwindigkeitsnetze meist als optische Netze ausgebildet, so dass als Verbindungen zwischen einzelnen Modulen eines mehrstufig aufgebauten Netzknotens optische Leiter bzw. Kabel verwendet werden. Einzelne Verbindungen zwischen eingangs- und ausgangsseitig zu verbindenden Modulen erfolgen über ein- und ausgangsseitige Schnittstellen-Ports eines Moduls, welche ein wellenspezifisches Verhalten besitzen. Die Schnittstellen-Ports sitzen daher an einer von außen zugänglichen Stelle, meist Frontblende, eines Moduls, so dass eine gewünschte Verkabelung von außen auch nach dem Einsetzen eines Moduls vorgenommen werden kann.

Aufgrund der Komplexität des Aufbaus eines Netzknotens sind dabei eine große Anzahl (meist mehrere Hundert Ports) miteinander zu verkabeln. Aufgrund der Mehrstufigkeit bestehen für diese Verkabelung (im Unterschied zu einem Bussystem) keine gleichwertigen Alternativen, so dass die Verkabelung der Schnittstellen-Ports, in vorbestimmter Weise, nämlich eineindeutig erfolgen muss. Eine Überprüfung der Verkabelung sowie Arbeiten, welche eine zumindest teilweise Neuverkabelung erfordern, sind daher komplexe Aufgaben mit einer großen Fehlerwahrscheinlichkeit.

Der vorliegenden Erfindung liegt daher die Aufgabe zugrunde eine Vorrichtung sowie eine Verwendung dieser Vorrichtung zu schaffen, welche eine eineindeutige Identifizierung bzw. Lokalisierung eines Moduls oder einen Schnittstellen-Ports eines Telekommunikationssystems erleichtert und Fehler, wie insbesondere eine fehlerhafte Verkabelung, zu vermeiden hilft.

Diese Aufgabe wird erfindungsgemäß durch eine Vorrichtung mit den Merkmalen des Anspruchs 1 sowie durch eine Verwendung dieser Vorrichtung mit den Merkmalen des Anspruchs 7 gelöst.

Nach der Erfindung wird ein mobiles Endgerät (beispielsweise ein Smartphone, Tablet PC, Notebook, Laptop) als Hilfsmittel verwendet, welches dem Techniker die Erledigung seiner Arbeit erleichtert. Das mobile Endgerät weist hierzu eine Erkennungseinrichtung auf, mittels welcher ein vorzugsweise mit einem Kennzeichen bzw. Label versehenes Modul und /oder Schnittstellenport, etc. identifiziert werden kann. Nach der Identifikation und damit Lokalisierung eines Moduls können auf einer Anzeigeeinheit des mobilen Endgeräts modul- oder portspezifische Informationen angezeigt werden. Statt einem Identifizieren eines Labels, beispielsweise eines 1-D, 2-D, 3-D Barcodes, einer beliebigen nicht elektronischen Markierung oder auch eines RFID-Tags, ist es selbstverständlich auch denkbar, die Identifizierung eines Moduls mittels einer Bilderkennung zwischen einem vorhandenen Ist-Muster und einem gespeicherten SollMuster des jeweiligen Moduls durchzuführen.

Die für eine beliebige Mustererkennung notwendigen Sollmuster können hierbei in einer lokalen Datenbank des mobilen Endgeräts und/oder dezentral im System (in einer Datenbank eines Systemcontrollers) in einem Netzknoten und/oder zentral im System in einer Netzwerk-Operations-Zentrale (NOC) vorgehalten werden.

Das mobile Endgerät weist hierzu eine Erkennungseinrichtung, beispielsweise eine Kamera für die Bilderkennung oder ein Empfangsteil für ein RFID-Tag, auf. Zudem weist das mobile Endgerät eine Kommunikationseinrichtung auf, um direkt mit dem lokalen Netzknoten bzw. dem darin enthaltenen Systemkontroller und/oder direkt mit der NOC eine bidirektionale Kommunikation zu ermöglichen. Selbstverständlich ist es - statt einer direkten Kommunikation mit der NOC - auch möglich mit der NOC über eine Kommunikationsstrecke zum Systemcontroller und damit mittelbar mit der NOC Daten auszutauschen. Die Kommunikation kann hierbei über unterschiedlichste Wege bzw. feste Verbindungen (insbesondere USB-Anbindung) oder drahtlose Verbindungen, wie beispielsweise Bluetooth, WLAN, GPRS, UMTS, LTE, zustande kommen.

Auf vorgenannte Kommunikationswege werden nach der Erfindung auch modul- oder portspezifische Daten übertragen, welche dann auf einer Anzeigeeinheit, beispielweise ein Display, des mobilen Endgeräts ausgegeben werden, um den Außendiensttechniker bei seiner Arbeit zielführend zu unterstützen.

In bevorzugter Ausgestaltung der Erfindung werden als modul- und/oder portspezifische Daten Performance-Daten, Alarmhistorie oder Verkabelungsinformationen des identifizierten Moduls oder Ports übertragen und angezeigt, so dass einem Außendiensttechniker bei seiner Arbeit eine Vielzahl von wesentlichen Informationen zur Verfügung steht.

Weitere vorteilhafte Ausgestaltungen der Erfindung ergeben sich aus den Unteransprüchen.

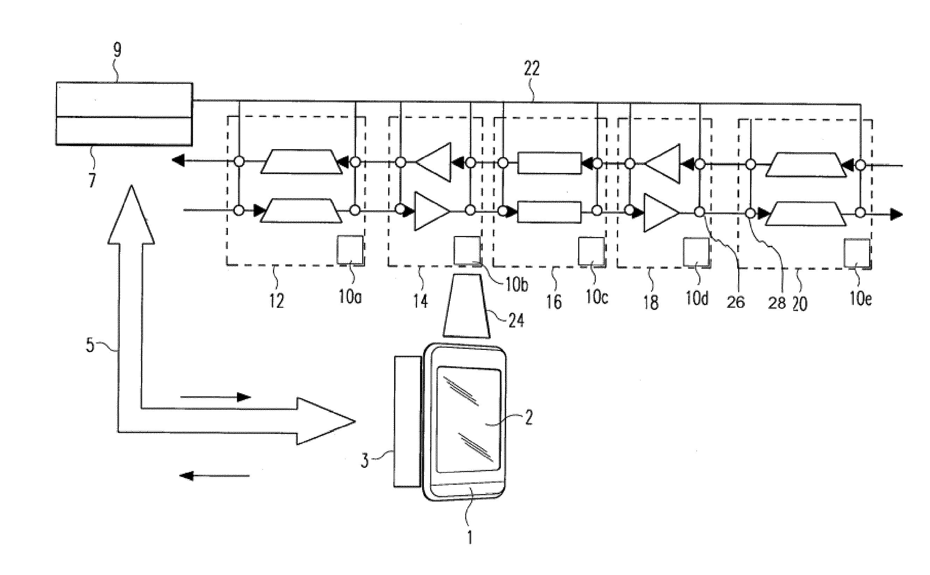

Die Erfindung wird nachfolgend anhand eines in der Zeichnung dargestellten Ausführungsbeispiels näher erläutert.

In der einzigen Figur der Zeichnung ist schematisch ein Netzknoten eines Telekommunikationssystems (System zur Video-, Audio-, Datenübertragung), insbesondere eines Hochgeschwindigkeitssystems mit Übertragungsraten von wenigstens 100 Gbit/s (bis ein oder mehrere TeraBit/s) und ein mobiles Endgerät nach der Erfindung, beispielsweise in Form eines Smartphones, dargestellt.

Der Netzknoten umfasst räumlich üblicherweise ein Rack mit darin enthaltenen Abteilungen (shelves und subshelves) und Einschüben bzw. Einschubrahmen (beispielsweise 19 Zoll breite Einschübe), in deren Slots wiederum Steckkarten 12, 14, 16, 18, 20, beispielsweise bis zu 20 an der Zahl, einsetzbar sind. Die Steckkarten 12, 14, 16, 18, 20 weisen wenigstens einen eingangsseitigen Schnittstellenport 28 und einen ausgangsseitigen Schnittstellenport 26 auf, wobei durchaus mehrere Schnittstellenports 26, 28 pro Steckkarte 12, 14, 16, 18, 20, wie beispielsweise in der Zeichnung dargestellt vier Schnittstellen-Ports, oder mehr Schnittstellen-Ports pro Steckkarte 12, 14, 16, 18, 20 vorhanden sein können.

Selbstverständlich sind neben oder statt den dargestellten Schnittstellen-Ports 26, 28 auch Schnittstellen-Ports in den Einschubrahmen (shelves oder subshelves) oder im Rack selbst möglich.

Aufgrund der spezifischen, insbesondere wellenlängenspezifischen, Eigenschaften der Schnittstellen-Ports (meist optische Schnittstellen mit abgestimmter Verkabelung untereinander) 26, 28 sowie augrund des mehrstufigen Aufbaus eines Netzknotens ist eine eineindeutige Verkabelung ohne Alternativen erforderlich. Hierzu sind, wie in der Zeichnung dargestellt, ein- und ausgangsseitige Ports 26, 28 jeweils benachbarter Paare 12; 14, 14; 16, 16; 18 und 18; 20 der Steckkarten von Ausgang zu Eingang und Eingang zu Ausgang (entsprechend der Pfeilrichtung in der Zeichnung) unmittelbar und vorzugsweise auf kürzestem Weg miteinander verbunden. Die in der Zeichnung schematisch als Nachbarpaare dargestellte Anordnung steht hierbei für zusammengehörende bzw. direkt miteinander zu verbindende Module, wobei deren tatsächliche (räumliche) Anordnung in den Slots oder in einem Rack nicht unbedingt als räumliche Nachbarn auszulegen ist. So ist es denkbar, dass eine Steckkarte 12, 14, 16, 18, 20 auch mit einer räumlich weiter entfernten Steckkarte 12, 14, 16, 18, 20 bzw. deren Schnittstellen-Ports 26, 28 verbunden werden.

Die Anzahl von zu verkabelnden von außen zugänglichen Schnittstellen-Ports 26, 28 in einem Netzknoten eines vorgenannten Systems, beispielweise ein Metronet, beläuft sich schnell auf einige zig oder gar hundert Ports.

So ist bei einer üblichen Anzahl von wenigstens zwei, vier, acht oder mehre Schnittstellen-Ports 26, 28 pro Steckkarte und bis zu 20 Steckkarten pro Einschubrahmen (beispielsweise der Regel 19 Zoll breit) sowie mehreren Einschubrahmen pro Rack eines Netzknotens beispielsweise eine Verkabelung von hundert oder mehreren Hundert Ports erforderlich.

Um diese von außen zugängliche (meist frontseitige) Verkabelung auf einfache Weise vorzunehmen, zu warten oder zu ändern, sind nach der Erfindung von außen zugänglich, beispielsweise frontseitig, Label bzw. Kennzeichnungen 10a, 10b, 10c, 10d, 10e angebracht welche eine eindeutige Identifizierung der jeweiligen Steckkarte 12, 14, 16, 18, 20 ermöglichen. Durch die unterschiedliche Anordnung der Schnittstellen-Ports 26, 28 auf einer Steckkarte 12, 14, 16, 18, 20 ist auch ein jeweiliger Schnittstellen-Port 26, 28 eineindeutig identifizierbar und lokalisierbar. Zudem ist es selbstverständlich auch denkbar, jeden Schnittstellen-Port 26, 28 einer Steckkarte 12, 14, 16, 18, 20 mit einer Kennzeichnung zu versehen.

Die Kennzeichnungen 10a, 10b, 10c, 10d, 10e welche beispielsweise als 1-D oder 2-D Barcode ausgeführt sind, können, wie in der Zeichnung anhand der Kennzeichnung 10b dargestellt, von der Kamera eines Smartphones 1 erfasst (Bereich 24), und erkannt werden. Hierbei findet vorzugsweise ein Musterabgleich zwischen einem erfassten (Ist-)Muster und einem für das System bekannten Sollmuster statt, so dass bei einer Übereinstimmung zu einem vorbestimmten Grad das Ist-Muster identifiziert werden kann. Selbstverständlich ist es aber auch denkbar als Kennzeichnung andere Arten einer Mustererkennung bis hin zu einem optischen Abgleich einer vorhandenen Ist-Verkabelung (Bilderkennung eines Ist-Musters als Kennzeichnung) mit einer gewünschten Soll-Verkabelung (gespeichertes Soll-Bildmuster) anzuwenden.

Nach einem erfolgreichen Identifizieren und Lokalisieren einer Steckkarte 12, 14, 16, 18, 20 und damit deren jeweilige Schnittstellen-Ports 26, 28 kann auf einer Anzeigeeinheit 2 beispielsweise in Form eines Farbdisplays eine steckkarten- oder portspezifische Information angezeigt werden. Beispielsweise kann eine korrekte Soll-Verkabelung bzw. ein diesbezüglicher Ausschnitt eines Gesamtplans angezeigt werden, anhand dessen ein Außendiensttechniker die aktuelle Ist-Verkabelung leicht vornehmen, kontrollieren oder ändern kann.

Statt oder neben einer Verkabelungsinformationen können als modul-, bzw. steckkar-ten- oder portspezifische Information selbstverständlich auch andere Daten, wie Performance-Daten, Alarmhistorie, etc., des identifizierten Moduls oder Ports dienen, um einen Außendiensttechniker bei seinen auszuführenden Arbeiten zu unterstützen. So kann ein, beispielsweise aufgrund einer Funktionsänderung oder eines Defekts, erforderlicher Austausch einer Steckkarte oder eines anderen Moduls durch eine erfindungsgemäß durchgeführte Identifikation und Lokalisierung des Moduls im Netzknoten vor Ort wesentlich vereinfacht werden.

Die steckkarten- oder portspezifische Information kann hierbei ebenso wie ein Ist-Muster in dem Smartphone 1 bzw. in dessen Speicher abgelegt sein und/oder bei Bedarf von einer übergeordneten Einheit entsprechend der erfassten oder erkannten Kennzeichnung 10a, 10b, 10c, 10d, 10e angefordert werden.

Das Smartphone 1 besitzt für die Kommunikation mit einer übergeordneten Einheit eine - vorzugsweise drahtlose - Schnittstelle, beispielsweise Bluetooth-Schnittstelle 3, mittels welcher eine bidirektionale Kommunikationsstrecke 5 zu einem Systemcontroller 9 über dessen vorzugsweise drahtlose Schnittstelle 7 aufgebaut werden kann. Selbstverständlich ist es auch denkbar, eine Datenverbindung - anstelle über eine drahtlose Kommunikationsstrecke 5 - über eine direkte (optische oder elektronische) leitende Verbindung, beispielsweise eine USB-Anbindung, herzustellen.

Die übergeordnete Einheit, bei welcher vorgenannte Daten angefordert werden können, ist in der Regel der lokale Systemcontroller 9, da in dieser Komponente bzw. diesem Modul (beispielsweise in einer Speichereinrichtung des Systemcontrollers 9) des Netzknotens üblicherweise alle netzwerkknotenspezifischen oder gar modulspezifischen Informationen vorhanden sind und der Systemcontroller 9 mit vielen - vorzugsweise allen - Modulen eines Netzknotens in Verbindung steht. Wie in der Zeichnung schematisch dargestellt, kann der Systemcontroller hierzu über eine Verbindung 22 mit allen Ports 26, 28 der Steckkarten 12, 14, 16, 18, 20 verbunden sein. Hierdurch stehen dem Systemcontroller 9 alle an jeweiligen Eingangs- und Ausgangsignalpunkten der Module, insbesondere Steckkarten, anliegenden Signale zur Auswertung, Steuerung, etc., zur Verfügung.

Selbstverständlich ist es aber auch denkbar, dass die vorgenannten Daten zumindest teilweise von der NOC, als zentrale übergeordnete Einheit angefordert werden. Hierzu kann die Kommunikation entweder mittelbar über den Systemcontroller 9, welcher wiederum mit der NOC in Verbindung steht, oder über eine direkte Kommunikationsstrecke, beispielweise mittels UMTS-Verbindung, via Internet, insbesondere VPN-Anbindung, zwischen Smartphone und NOC erfolgen. Hierdurch kann beispielsweise zentral auch Upgrade einer lokal im Systemcontroller bzw. dessen Speichereinrichtung vorhandene Datenbank erfolgen.

Neben dem Versehen eines Moduls oder Schnittstellen-Ports 26, 28 mit einer Kennzeichnung 10a, 10b, 10c, 10d, 10e ist es aber auch denkbar, zusätzlich die Konnektoren (Steckverbinder), insbesondere optische Konnektoren, der Kabel(-enden) zu kennzeichnen, um auch eine Zuordnung zwischen Port und Konnektor eines Kabel zu erleichtern.

### Bezugszeichenliste

- 1: Smartphone
- 2: Anzeigeeinheit
- 3: Bluetooth-Schnittstelle
- 5: Kommunikationsstrecke (bidirektional)
- 7: Bluetooth-Schnittstelle
- 9: Systemcontroller
- 10a: Kennzeichnung/Label
- 10b: Kennzeichnung/Label
- 10c: Kennzeichnung/Label
- 10d: Kennzeichnung/Label
- 10e: Kennzeichnung/Label
- 12: Modul/Steckkarte
- 14: Modul/Steckkarte
- 16: Modul/Steckkarte
- 18: Modul/Steckkarte
- 20: Modul/Steckkarte
- 22: Verbindung zum Systemcontroller
- 24: Erkennungsbereich Kamera
- 26: Schnittstellen-Port (Ausgang)
- 28: Schnittstellen-Port (Eingang)

## Patentansprüche

1. Mobiles Endgerät zur Wartung eines Telekommunikationssystems, wobei das Telekommunikationssystems einen Systemcontroller (9) und wenigstens ein Modul (12, 14, 16, 18, 20) und/oder wenigstens einen (im gesteckten Zustand des Moduls von außen zugänglichen) Schnittstellen-Port (26, 28) umfasst,
**dadurch gekennzeichnet, dass**
das mobile Endgerät eine Erkennungseinrichtung aufweist, um ein Modul (12, 14, 16, 18, 20) oder einen Schnittstellen-Port (26, 28) zu identifizieren,
das mobile Endgerät eine Kommunikationseinrichtung (3) aufweist, um in Abhängigkeit des identifizierten Moduls (12, 14, 16, 18, 20) oder des identifizierten Schnittstellen-Ports (26, 28) mit dem Systemcontroller (9) zu kommunizieren und modul- oder portspezifische Daten zu empfangen und
das mobile Endgerät eine Anzeigeeinheit (2) aufweist, um modul- oder portspezifische Informationen anzuzeigen.

2. Mobiles Endgerät nach Anspruch 1, **dadurch gekennzeichnet, dass** das mobile Endgerät als Smartphone (1), Tablet PC, Notebook oder Laptop ausgebildet ist.

3. Mobiles Endgerät nach Anspruch 1 oder 2, **dadurch gekennzeichnet, dass** das Modul (12, 14, 16, 18, 20) oder der Schnittstellen-Port (26, 28) mit wenigstens einer Kennzeichnung (10a, 10b, 10c, 10d, 10e) versehen ist.

4. Mobiles Endgerät nach Anspruch 3, **dadurch gekennzeichnet, dass** als Kennzeichnung (10a, 10b, 10c, 10d, 10e) ein Barcode (1-D, 2-D oder 3-D) verwendet wird.

5. Mobiles Endgerät nach einem der vorhergehenden Ansprüche, **dadurch gekennzeichnet, dass** die Erkennungseinrichtung eine Kamera aufweist, um eine Identifizierung des Moduls (12, 14, 16, 18, 20), eines Schnittstellen-Ports (26, 28) oder einer Kennzeichnung (10a, 10b, 10c, 10d, 10e) mittels Bilderkennung zu ermöglichen.

6. Mobiles Endgerät nach einem der vorhergehenden Ansprüche, **dadurch gekennzeichnet, dass** es sich bei den modul- oder portspezifischen Daten um Performance-Daten, Alarmhistorie oder Verkabelungsinformationen des identifizierten Moduls (12, 14, 16, 18, 20) oder Ports (26, 28) handelt.

7. Verwendung eines mobilen Endgeräts nach einem der vorhergehenden Ansprüche zur Wartung eines Telekommunikationssystems, wobei das Telekommunikationssystem einen Systemcontroller (9) und wenigstens ein Modul (12, 14, 16, 18, 20) und/oder wenigstens einen Schnittstellen-Port (26, 28) umfasst.

8. Verwendung eines mobilen Endgeräts nach Anspruch 7, **dadurch gekennzeichnet, dass** es sich bei dem Telekommunikationssystem um ein Wellenlängenmultiplexsystem (WDM) handelt.

9. Anordnung aus einem Telekommunikationssystem und einem mobilen Endgerät nach einem der Ansprüche 1 bis 6.
